# EUROPEAN PATENT APPLICATION

(11) **EP 0 927 985 A2**
(43) Date of publication of application: **07.07.1999**
(21) Application number: 98310653.5
(22) Date of filing: 23.12.1998
(51) Int. Cl.: G09F 27/00

(54) **Motion detection advertising**

(30) Priority: 31.12.1997 US 1355
(71) Applicant: AT&T Corp., New York, NY 10013-2412 (US)
(72) Inventor: Gerszberg, Irwin, Kendall Park, New Jersey 08824 (US); Martin, Jeffrey S., Dover, New Jersey 07801 (US); Walker, Hopeton S., Haledon, New Jersey 07508 (US)
(74) Representative: Asquith, Julian Peter

(57) **Abstract**

The present invention provides an efficient solution for regulating the amount of advertisement directed towards a particular consumer. In its broadest sense, the present invention gives advertisers the ability to expose consumers to advertisements for a specified period, as well as collect information on the exposure that a customer has had with an advertisement or group of advertisements before a purchase is made. Based on this information, advertisers can make strategic decisions on how to more efficiently market their products. Additionally, the present invention eliminates the wastefulness associated with advertising to a non-existent audience and audiences that have already been continuously exposed to previously similar advertisements. The advertisements will only be shown when someone is present to view them. As a result, the manner in which advertisements are presented to consumers can be monitored and more efficiently managed.

## Description

### Field of the Invention

This invention relates generally to consumer appliances and, more particularly, to a system and method for controlling and directing advertisements based upon the detection of motion near a touch-screen based telephone.

### Background

As deregulation of the telephone industry continues and as companies prepare to enter the local telephone access market, there is a need to offer new and innovative services that distinguish common carriers from their competitors. This cannot be accomplished without introducing new local access network architectures that will be able to support these new and innovative services.

Conventionally, customer premises telephone and/or data connections contain splitters for separating analog voice calls from other data services such as Ethernet transported over digital subscriber line (DSL) modems. Voice band data and voice signals are sent through a communications switch in a central or local office to an interexchange carrier or Internet service provider. DSL data is sent through a digital subscriber loop asynchronous mode (DSLAM) switch which may include a router. The DSLAM switch connects many lines and routes the digital data to a telephone company's digital switch.

A major problem with this configuration is that interexchange carriers attempting to penetrate the local telephone company's territory must lease trunk lines from the local telephone company switch to the interexchange company's network for digital traffic. Furthermore, the Internet service provider must lease a modem from the local phone company in the DSLAM switch and route its data through the local phone company's digital switch. Thus, the local phone company leases and/or provides a significant amount of equipment, driving up the cost of entry for any other company trying to provide local telephone services and making it difficult for the interexchange companies to differentiate their services. Furthermore, since DSL modem technology is not standardized, in order to ensure compatibility, the DSL modem provided by the local telephone company must also be provided to the end user in the customer premises equipment (CPE). Additionally, since the network is not completely controlled by the interexchange companies, it is difficult for the interexchange companies to provide data at committed delivery rates. Any performance improvements implemented by the interexchange companies may not be realized by their customers, because the capabilities of the local telephone company equipment may or may not meet their performance needs. Thus, it is difficult for the interexchange companies to convince potential customers to switch to their equipment or to use their services. These factors ensure the continued market presence of the local telephone company.

As part of this system, there is a need for improved architectures, services and equipment utilized to distinguish the interexchange companies' products and services.

Current advertising systems attempt to capture large amounts of prospective customers by consistently repeating the same advertisement. Most traditional advertising media such as radio and television, rely on the consumer being within sensual proximity of the device presenting the advertisement. Advertisers must continuously repeat the commercials in order to ensure the maximum number of consumers are being exposed to the products being advertised. As an example, the television is one such medium that continually repeats the same commercials over a period of time. As a result of the continuous repeating of the same advertisement, consumers tend to get turned off and may switch channels to avoid the advertisement.

With the emergence of consumer appliances such as screen phones, advertisers now have a new medium from which to launch the advertisements for their products. As with traditional advertising medium, the question becomes how to target consumers in such a way that an advertiser receives the maximum benefit in the most efficient manner.

Motion detection technology used in conjunction with a screen phone allows an advertiser to detect the presence of the consumer in the area of the device and control the advertising exposure to the consumer based upon specified criteria. The specified criteria can depend upon any number of details, a few of which are prior exposure, prior purchases, prior interest in the particular category of goods or services or time of the day. By detecting movement within the vicinity of the screen phone coupled with the knowledge of the specified criteria, the device can efficiently regulate the amount and nature of the advertising done within a particular household.

By regulating and efficiently managing the method with which advertisements are distributed to consumers, advertisers can target the exposure of their products to potential consumers without having to continuously rebroadcast their advertisements. The resulting efficiency eliminates the need to repeat an advertisement several times so that by mere chance based upon repetition an interested consumer will eventually be present to view the advertisement. Additionally, by using simple logging methods, an advertiser can keep track of the amount of time a consumer has been exposed to advertising, the specific nature of the advertising they took the time to view and if they took time to seek out further information about the product (e.g. a coupon, web page or interactive demonstration).

As a result of advertisers having this means for determining the exposure time that consumers have had with specific advertisements, advertisers can more efficiently distribute their advertisements. No longer would an advertiser need to inundate the consumer with an endless stream of potentially irrelevant advertisements. Using the information obtained from logging when and what was viewed by the consumer, advertisers can target consumers with specific advertisements at specific times of the day. This control over the time that a consumer is exposed to a particular advertisement could also entice consumers to view more advertisements, since the consumer is assured that they are not being herded with a barrage of advertisements that they have already seen.

Advertisers could also collect geographical information as well as the time that advertisements were viewed by the consumer and use this information to aid in the decision of when a consumer would be more likely to make a purchase decision.

### Summary of the Invention

In order to provide an improved network, it is desirable for the interexchange companies to have access to at least one of the twisted-pair lines or alternate wireless facility connecting each of the individual users to the local telephone network before the lines are routed through the conventional local telephone network equipment. It is preferable to have access to these lines prior to the splitter and modem technology offered by the local service providers. By having access to the twisted-pair wires entering the customer's premises, interexchange companies can differentiate their services by providing higher bandwidth, improving the capabilities of the customer premises equipment, and lowering overall system costs to the customer by providing competitive service alternatives.

The new architecture may utilize a video phone and/or other devices to provide new services to an end user; an intelligent services director (ISD) disposed near the customer's premises for multiplexing and coordinating many digital services onto a single twisted-pair line; a facilities management platform (FMP) disposed in the local telephone network's central office for routing data to an appropriate interexchange company network; and a network server platform (NSP) coupled to the FMP for providing new and innovative services to the customer and for distinguishing services provided by the interexchange companies from those services provided by the local telephone network.

As part of this system, one aspect of the invention provides a novel method and apparatus for determining the amount of time a consumer is exposed to a particular advertisement. By collecting information based upon time of exposure, the advertiser can determine the likes and dislikes specific to each consumer and target the consumer with appropriate advertising. The information collected is processed and applied to show advertisements tailored specifically to a consumer's individual preferences.

The present invention also provides an efficient solution for regulating the amount of advertisement directed towards a particular consumer. In its broadest sense, the present invention gives advertisers the ability to expose consumers to advertisements for a specified period, as well as collect information on the exposure that a customer has had with an advertisement or group of advertisements before a purchase is made. Based on this information, advertisers can make strategic decisions on how to more efficiently market their products.

Additionally, the present invention eliminates the wastefulness associated with advertising to a non-existent audience and audiences that have already been continuously exposed to previously similar advertisements. The advertisements will only be shown when someone is present to view them. As a result, the manner in which advertisements are presented to consumers can be monitored and more efficiently managed.

### Brief Description of the Drawings

The foregoing summary of the invention, as well as the following detailed description of preferred embodiments, is better understood when read in conjunction with the accompanying drawings, which are included by way of example, and not by way of limitation with regard to the claimed invention.

Fig. 1 illustrates an embodiment of a hybrid fiber twisted pair local loop architecture.

Fig. 2 is a block diagram of an embodiment of an intelligent services director consistent with the architecture shown in Fig. 1.

Fig. 3A and 3B illustrate an embodiment of a video phone consistent with the architecture shown in Fig. 1.

Fig. 4A is a block diagram of an embodiment of a facilities management platform consistent with the architecture shown in Fig. 1.

Fig. 4B illustrates a block diagram of an embodiment of a network server platform consistent with the architecture shown in Fig. 1.

Fig. 5 illustrates a flow diagram illustrating the steps required for the operation of motion detected advertising for use in conjunction with the video phone shown in Figs. 3A and 3B.

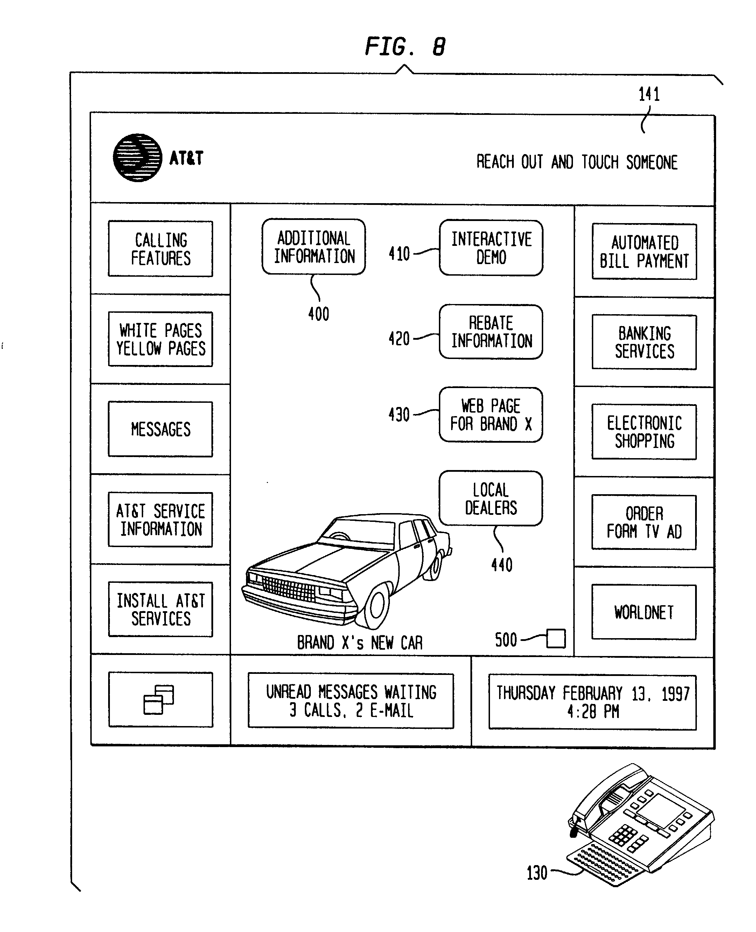

Figs. 6, 7 and 8 illustrate an embodiment of an advertising display when activating the motion detected advertising steps shown in Fig. 5.

### Detailed Description of Preferred Embodiments

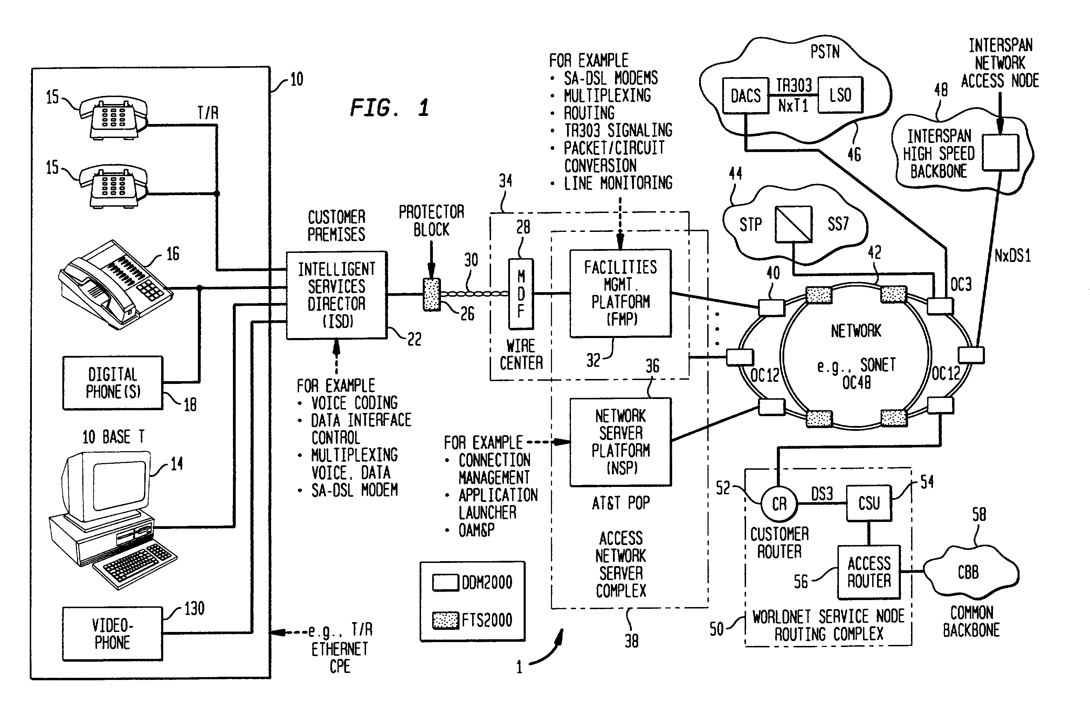

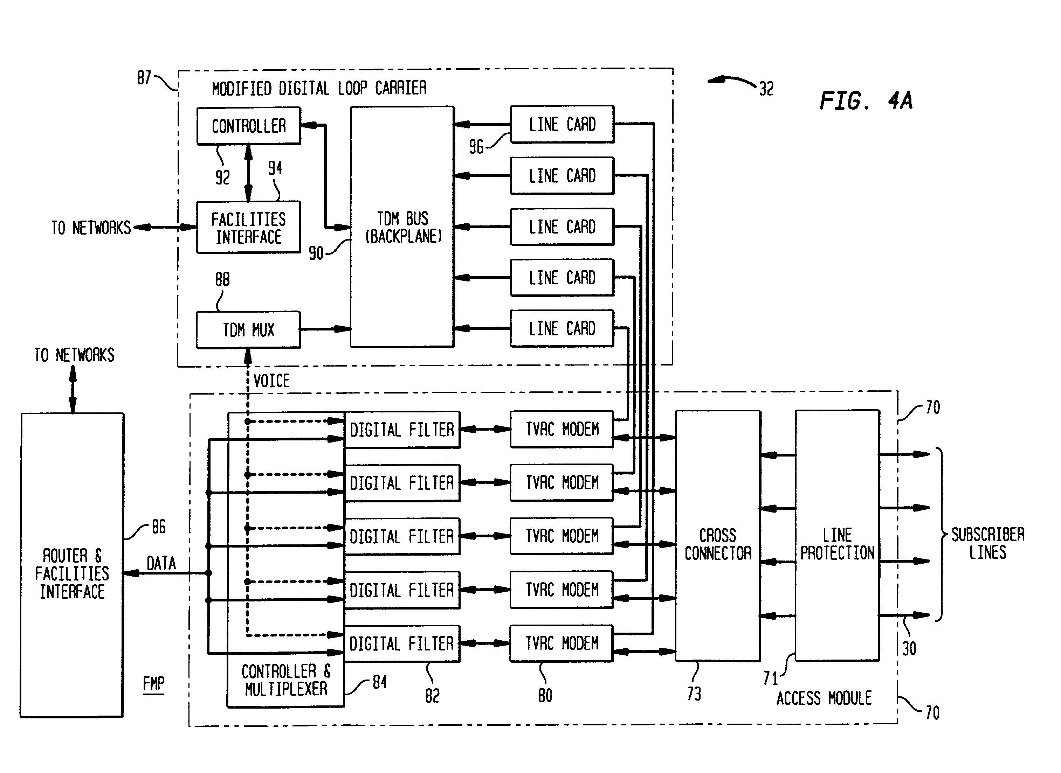

Referring to Fig. 1, a first exemplary communication network architecture employing a hybrid fiber, twisted-pair (HFTP) local loop 1 architecture is shown. An intelligent services director (ISD) 22 may be coupled to a central office 34 via a twisted-pair wire, hybrid fiber interconnection, wireless and/or other customer connection 30, a connector block 26, and/or a main distribution frame (MDF) 28. The ISD 22 and the central or local office 34 may communicate with each other using, for example, framed, time division, frequency-division, synchronous, asynchronous and/or spread spectrum formats, but in exemplary embodiments uses DSL modem technology. The central office 34 preferably includes a facilities management platform (FMP) 32 for processing data exchanged across the customer connection 30. The FMP 32 may be configured to separate the plain old telephone service (POTS) from the remainder of the data on the customer connection 30 using, for example, a tethered virtual radio channel (TVRC) modem (shown in Fig. 4A). The remaining data may be output to a high speed backbone network (e.g., a fiber-optic network) such as an asynchronous transfer mode (ATM) switching network. The analog POTS data may be output directly to a public switch telephone network (PSTN) 46, and/or it may be digitized, routed through the high speed backbone network, and then output to the PSTN 46.

The FMP 32 may process data and/or analog/digitized voice between customer premise equipment (CPE) 10 and any number of networks. For example, the FMP 32 may be interconnected with a synchronous optical network (SONET) 42 for interconnection to any number of additional networks such as an InterSpan backbone 48, the PSTN 46, a public switch switching network (e.g. call setup SS7-type network 44), and/or a network server platform (NSP) 36. Alternatively, the FMP 32 may be directly connected to any of these networks. One or more FMPs 32 may be connected directly to the high speed backbone network (e.g., direct fiber connection with the SONET network 42) or they may be linked via a trunk line (e.g., trunks 40 or 42) to one or more additional networks.

The NSP 36 may provide a massive cache storage for various information that may be provided across the SONET net 42 to the FMP 32 and out to the ISD 22. The NSP 36 and the FMP 32 may collectively define an access network server complex 38. The NSP 36 may be interconnected with multiple FMPs 32. Furthermore, each FMP 32 may interconnect with one or more ISDs 22. The NSP 36 may be located anywhere but is preferably located in a point-of-presence (POP) facility. The NSP 36 may further act as a gateway to, for example, any number of additional services.

The ISD 22 may be interconnected to various devices such as a videophone 130, other digital phones 18, set-top devices, computers, and/or other devices comprising the customer premise equipment 10. The customer premise equipment may individually or collectively serve as a local network computer at the customer site. Application applets may be downloaded from the NSP 36 into some or all of the individual devices within the customer premise equipment 10. Where applets are provided by the NSP 36, the programming of the applets may be updated such that the applets are continually configured to the latest software version by the interexchange carrier. In this way, the CPE 10 may be kept up to date by simply re-loading updated applets. In addition, certain applets may be resident on any of the CPE 10. These resident applets may be periodically reinitialized by simply sending a request from, for example, a digital phone 18 and/or a videophone 130 to the FMP 32 and thereafter to the NSP 36 for reinitialization and downloading of new applets. To ensure widespread availability of the new features made possible by the present architecture, the customer premise equipment may be provided to end users either at a subsidized cost or given away for free, with the cost of the equipment being amortized over the services sold to the user through the equipment.

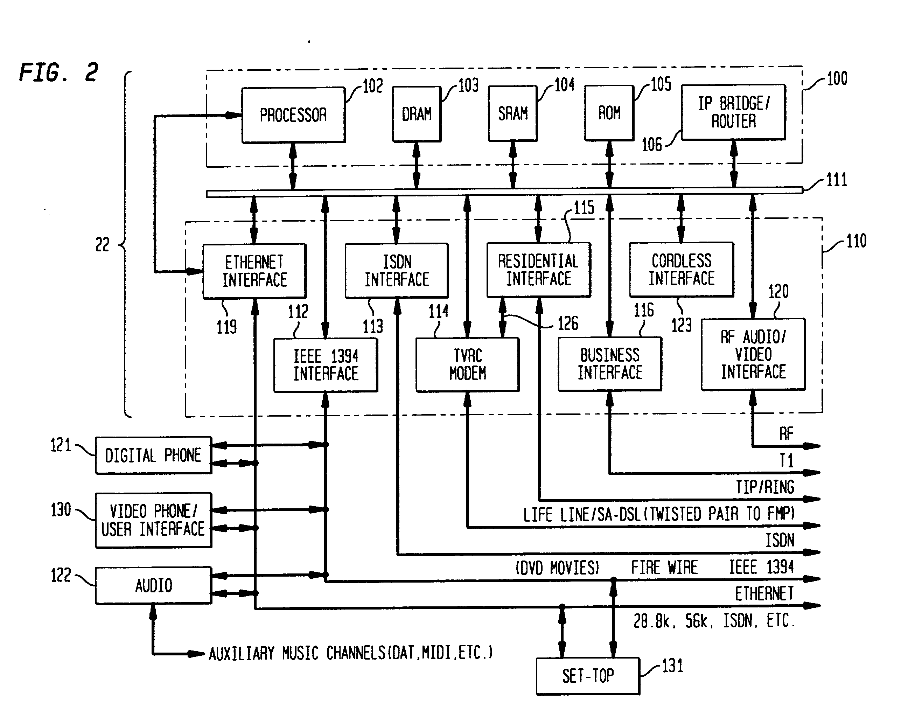

Referring to Fig. 2, the ISD 22 may connect with a variety of devices including analog and digital voice telephones 15, 18; digital videophones 130, devices for monitoring home security, meter reading devices (not shown), utilities devices/energy management facilities (not shown), facsimile devices 16, personal computers 14, and/or other digital or analog devices. Some or all of these devices may be connected with the ISD 22 via any suitable mechanism such as a single and/or multiple twisted-pair wires and/or a wireless connection. For example, a number of digital devices may be multi-dropped on a single twisted-pair connection. Similarly, analog phones and other analog devices may be multi-dropped using conventional techniques.

The ISD 22 may be located within the home/business or mounted exterior to the home/business. The ISD 22 may operate from electrical power supplied by the local or central office 34 and/or from the customer's power supplied by the customer's power company. Where the ISD 22 includes a modem, it may be desirable to power the ISD 22 with supplemental power from the home in order to provide sufficient power to enable the optimal operation of the modem.

As shown in Fig. 2, in some embodiments the ISD 22 may include a controller 100 which may have any of a variety of elements such as a central processing unit 102, a DRAM 103, an SRAM 104, a ROM 105 and/or an internet protocol (IP) bridge router 106 connecting the controller 100 to a system bus 111. The system bus 111 may be connected with a variety of network interface devices 110. The network interface devices 110 may be variously configured to include an integrated services digital network (ISDN) interface 113, an Ethernet interface 119 (e.g., for 28.8 kbs data, 56 kbs data, or ISDN), an IEEE 1394 "fire wire" interface 112 (e.g., for a digital videodisc device (DVD)), a TVRC modem interface 114 (e.g., for a digital subscriber line (DSL) modem), a residential interface 114, (e.g., standard POTS phone systems such as tip ring), a business interface 116 (e.g., a T1 line and/or PABX interface), a radio frequency (RF) audio/video interface 120 (e.g., a cable television connection), and a cordless phone interface 123 (e.g., a 900 MHZ transceiver). Connected to one of the network interfaces and/or the system bus 111 may be any number of devices such as an audio interface 122 (e.g., for digital audio, digital telephones, digital audio tape (DAT) recorders/players, music for restaurants, MIDI interface, DVD, etc.), a digital phone 121, a videophone / user interface 130, a television set-top device 131 and/or other devices. Where the network interface is utilized, it may be desirable to use, for example, the IEEE 1394 interface 112 and/or the Ethernet interface 119.

A lifeline 126 may be provided for continuous telephone service in the event of a power failure at the CPE 10. The lifeline 126 may be utilized to connect the ISD 22 to the local telecommunications company's central office 34 and, in particular, to the FMP 32 located in the central office 34.

The ISD may be variously configured to provide any number of suitable services. For example, the ISD 22 may offer high fidelity radio channels by allowing the user to select a particular channel and obtaining a digitized radio channel from a remote location and outputting the digital audio, for example, on audio interface 122, video phone 130, and/or digital phones 121. A digital telephone may be connected to the audio interface 122 such that a user may select any one of a number of digital audio service channels by simply having the user push a digital audio service channel button on the telephone and have the speaker phone output particular channels. The telephone may be preprogramed to provide the digital audio channels at a particular time, such as a wake up call for bedroom mounted telephone, or elsewhere in the house. The user may select any number of services on the video phone and/or other user interface such as a cable set-top device. These services may include any number of suitable services such as weather, headlines in the news, stock quotes, neighborhood community services information, ticket information, restaurant information, service directories (e.g., yellow pages), call conferencing, billing systems, mailing systems, coupons, advertisements, maps, classes, Internet, pay-per-view (PPV), and/or other services using any suitable user interface such as the audio interface 122, the video phone / user interface 130, digital phones, 121 and/or another suitable device such as a settop device 131.

In further embodiments, the ISD 22 may be configured as an IP proxy server such that each of the devices connected to the server utilizes transmission control protocol / internet protocol (TCP/IP) protocol. This configuration allows any device associated with the ISD to access the Internet via an IP connection through the FMP 32. Where the ISD 22 is configured as an IP proxy server, it may accommodate additional devices that do not support the TCP/IP protocol. In this embodiment, the ISD 22 may have a proprietary or conventional interface connecting the ISD 22 to any associated device such as to the set top box 131, the personal computer 14, the video telephone 130, the digital telephone 18, and/or some other end user device.

In still further embodiments, the ISD 22 may be compatible with multicast broadcast services where multicast information is broadcast by a central location and/or other server on one of the networks connected to the FMP 32, e.g., an ATM-switched network. The ISD 22 may download the multicast information via the FMP 32 to any of the devices connected to the ISD 22. The ISD 22 and/or CPE 10 devices may selectively filter the information in accordance with a specific customer user's preferences. For example, one user may select all country music broadcasts on a particular day while another user may select financial information. The ISD 22 and/or any of the CPE 10 devices may also be programmed to store information representing users' preferences and/or the received uni-cast or multicast information in memory or other storage media for later replay. Thus, for example, video clips or movies may be multicast to all customers in the community with certain users being preconfigured to select the desired video clip/ movie in real time for immediate viewing and/or into storage for later viewing.

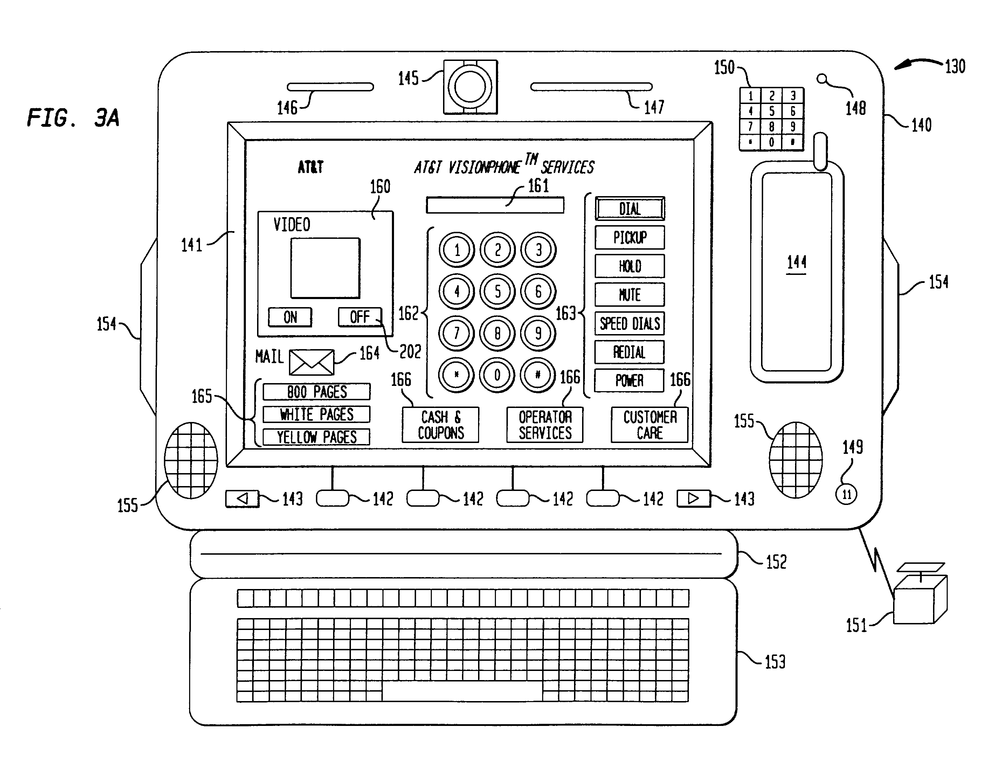

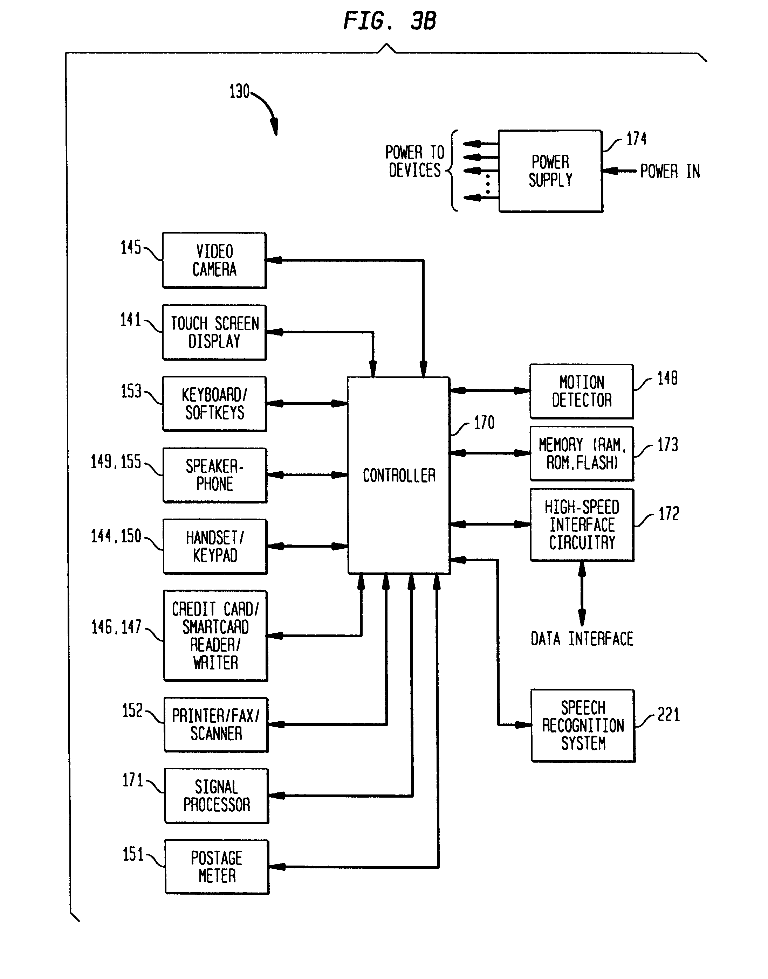

Referring to Fig. 3A, a videophone 130 may include a touch screen display 141 and soft keys 142 around the perimeter of the display 141. The display may be responsive to touch, pressure, and/or light input. Some or all of the soft keys 142 may be programmable and may vary in function depending upon, for example, the applet being run by the videophone 130. The function of each soft key may be displayed next to the key on the display 141. The functions of the soft keys 142 may also be manually changed by the user by pressing scroll buttons 143. The videophone 140 may also include a handset 144 (which may be connected via a cord or wireless connection to the rest of the videophone and/or directly to the ISD), a keypad 150, a video camera 145, a credit card reader 146, a smart card slot 147, a microphone 149, a motion and/or light detector 148, built-in speaker(s) 155, a printer/scanner/facsimile 152, and/or external speakers 154 (e.g., stereo speakers). A keyboard 153 and/or a postage scale 151 may also be connected to the videophone 130. Any or all of the above-mentioned items may be integrated with the videophone unit itself or may be physically separate from the videophone unit. A block diagram of the video phone unit is shown in Fig. 3B. Referring to Fig. 3B, in addition to the items above, the video phone 130 may also include a signal processor 171, high speed interface circuitry 172, memory 173, power supply 174, all interconnected via a controller 170.

When the videophone 130 is used as a video telephone, the display 141 may include one or more video window(s) 160 for viewing a person to whom a user is speaking and/or showing the picture seen by the person on the other end of the video phone. The display may also include a dialed-telephone-number window 161 for displaying the phone number dialed, a virtual keypad 162, virtual buttons 163 for performing various telephone functions, service directory icons 165, a mail icon 164, and/or various other service icons 166 which may be used, for example, for obtaining coupons or connecting with an operator. Any or all of these items may be displayed as virtual buttons and/or graphic icons and may be arranged in any combination. Additionally, any number of other display features may be shown on the video phone in accordance with one or more of the applications incorporated by reference below.

Referring to Fig. 4A, the FMP 32 may coordinate the flow of data packets, separate voice signals from other signals, perform line monitoring and switching functions, and/or convert between analog and digital signals. The FMP 32 may process data sent from the CPE 10 to the central or local office 34 by separating and reconstructing analog voice signals, data, and control frames. The FMP 32 may process data sent from the central or local office 34 to the CPE 10 by separating control messages from user information, and configure this information into segments that for transport across the digital subscriber loop. The FMP 32 may also terminate the link layer associated with the digital subscriber loop.

In some embodiments, the FMP 32 may include an access module 70 and a digital loop carrier 87. The access module 70 may include a line protector 71, a cross-connector 73, a plurality of TVRC modems 80, a plurality of digital filters 82, a controller multiplexer 84, and/or a router and facilities interface 86. The digital loop carrier 87 may include a plurality of line cards 96, a time domain multiplexing (TDM) multiplexor (MUX) 88, a TDM bus 90, a controller 92, and/or a facilities interface 94.

During normal operations, digital signals on the customer connection 30 (e.g., twisted-pair lines) containing both voice and data may be received by the TVRC modems 80 via the line protector 71 and the cross-connector 73. Preferably, the line protector 71 includes lightning blocks for grounding power surges due to lightning or other stray voltage surges. The TVRC modems 80 may send the digital voice and/or data signals to the controller multiplexor 84 and the digital filters 82. The digital filters 82 may separate the voice signals from the digital data signals, and the controller multiplexor 84 may then multiplex the voice signals and/or data signals received from the digital filters 82. The controller multiplexor 84 may then send multiplexed voice signals to the TDM MUX 88 and the data signals to the router and facilities interface 86 for transmission to one or more external networks. The TDM MUX 88 may multiplex the voice signals from the controller multiplexor 84 and/or send the voice signals to the TDM bus 90, which may then send the digital voice signals to the controller 92 and then to the facilities interface 94 for transmission to one or more external networks. Both the router and facilities interface 86 and the facilities interface 94 may convert between electrical signals and optical signals when a fiber optic link is utilized.

When there is a failure of the digital data link (e.g., if there is a failure of the TVRC modems 80 at the FMP 32 or the TVRC modem 114 at the ISD 22), only analog voice signals might be sent over the subscriber lines 30. In such a case, the analog voice signals may be directly routed to the line cards 96, bypassing the TVRC modems 80, the digital filters 82, the controller multiplexor 84, and the TDM MUX 88. Thus, voice communication is ensured despite a failure of the digital data link. The line cards 96 may convert the analog voice signals into digital format (e.g., TDM format) and send the digitized voice data onto the TDM bus 90 and eventually through the controller 92 and the facilities interface 94 for transmission to one or more external networks.

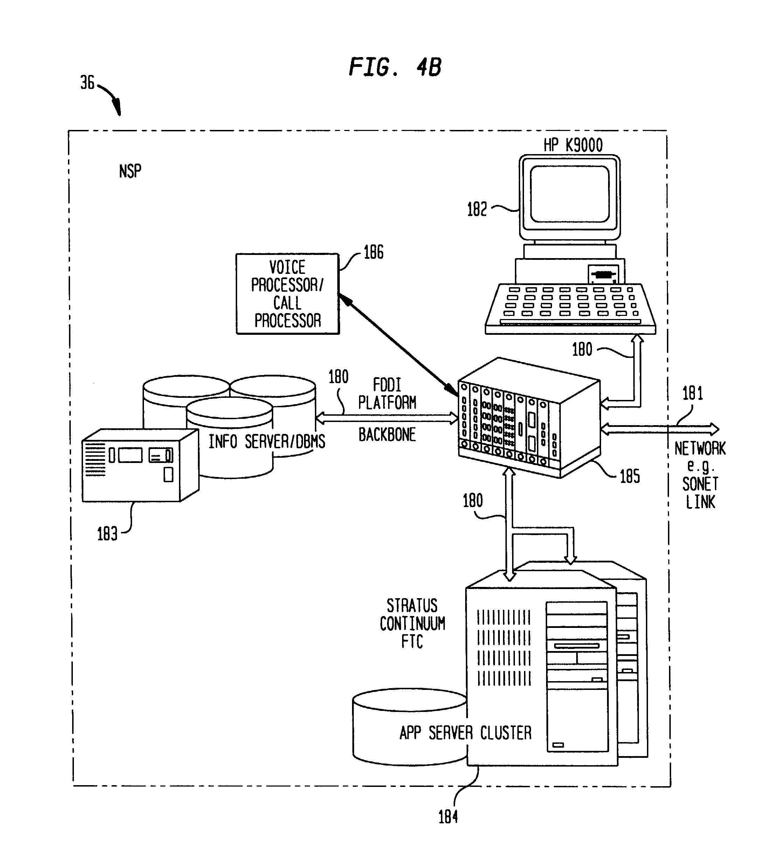

Referring to Fig. 4B, the NSP 36 may be variously configured to provide any number of services provided by a server such as information services, Internet services, pay-per-view movie services, data-base services, commercial services, and/or other suitable services. In the embodiment shown in Fig. 4B, the NSP 36 includes a router 185 having a backbone 180 (e.g., a fiber distributed data interface (FDDI) backbone) that interconnects a management server 182, an information/database server 183, and/or one or more application server clusters 184. The NSP 36 may be connected via the router 185 by a link 181 to one or more external networks, NSPs 36, and/or an FMPs 32. The information/data base server 183 may perform storage and/or database functions. The application server cluster 184 may maintain and control the downloading of applets to the ISD 22. The NSP 36 may also include a voice/call processor 186 configured to handle call and data routing functions, set-up functions, distributed operating system functions, voice recognition functions for spoken commands input from any of the ISD connected devices as well as other functions.

There are numerous electronic devices that give advertisers a media to transmit their advertisements. One such device is the screen telephone, hereinafter called the videophone 130 which may also be referred to as the video display device. The videophone 130 has a touch screen display 141 that can vary in size and is provided with touch screen capability. In accordance with the present invention, the videophone 130, which displays an advertisement, is interconnected to a motion sensing device, such as a motion detector 148. Motion detection is used to control the amount of advertising to which a consumer, also referred to as the video display user, is exposed.

As an example, Company A is willing to pay for the consumer to be exposed to three minutes of advertisement while Company B is only willing to pay for one minute of advertising. Both Company A and Company B would like to have the consumer view the entire amount of advertising they have paid for. The present invention will provide the advertiser a means for delivering advertisements to consumers in such a way that either one minute or three minutes of advertisement is displayed only when someone is in the vicinity to view the advertisement. This gives the advertiser the maximum amount of exposure without having to resort to repitition.

The present invention will provide a benefit to advertisers and consumers alike, providing a new media to perform many transactions that have been traditionally handled in other more cumbersome and potentially more expensive ways. Advertisers will be able to target consumers with specific advertising based upon prior interest in advertisements consumers have expressed. Advertisers will get maximum benefit from the advertisements delivered to consumers in terms of increased sales and directed exposure of their product to consumers best suited and most likely to make a buying decision thereby reducing the likelihood of resorting to bulk mailing to sell their product. Consumers will benefit as well because they will receive information only on products they would be interested in purchasing. Additionally, with the press of a button consumers will be able to get information about products without having to expend additional effort to research. Further, a buying decision can be made with the push of a button. In the discussion that follows, the term "advertisement" is used generically to represent video information or audio information presented to a customer which could potentially incorporate one or more of the options for selecting an item for purchase, a coupon or a request for further information.

The present invention allows an advertiser to obtain stored information about a consumer and utilize it to target the consumer with similar and appropriate advertisement. If a consumer is not interested in seeing information relating to sporting equipment, it would be a waste of the advertiser's dollar to display an advertisement directed to tennis gear when a consumer has absolutely no interest in tennis. Utilizing the present invention, when a consumer makes the decision to receive more information about a product, that decision is stored for later retrieval. The NSP 36 knows the location and the identity of the user of the videophone 130 whenever the touch screen display 141 is used as well as information about the advertisement that was displayed. Therefore, whenever a consumer expresses interest in a particular advertisement, this information is stored in the NSP 34, likely within the information/data base server 183. This information can then be used by the advertiser to target consumers with advertisements suited to their buying or viewing habits.

In a preferred embodiment, the motion detector 148 utilizes a video image that has been created by an image capturing device. The captured image is then compared to a previously captured image to determine if there has been movement in the vicinity of the video capturing device. The motion sensor 148 could also utilize a heat sensor which is helpful if someone is present but stationary. The motion sensor 148 could have many alternative embodiments that would be recognized by a person skilled in the art, including but not limited to optical, infrared, ultrasonic and audio detection. The motion detector senses when the video display user is sensed within proximity of the video display device.

When motion is detected, two timers are started. For ease of description, these timers will hereinafter be referenced as MOTION_TIMER and AD_TIMER. These timers, which could be implemented in hardware or software, can reside in the NSP 36.

The MOTION_TIMER is reset every time motion is detected by the motion detector 148. The MOTION_TIMER functions as a sort of hysterisis for the system. For instance, if a consumer is in front of the videophone 130 but does not move for a few seconds, then the hysterisis of the MOTION_TIMER keeps the advertisement going. When motion is not detected within the time period defined by the MOTION_TIMER interval, the touch screen display 141 can be blanked to save screen life and power or it could display a predetermined image.

The function of the AD_TIMER is to control the amount of time the consumer is exposed to any particular advertisement. After motion has been detected, such as described above, the AD_TIMER controls the length of time an advertisement is displayed. When the AD_TIMER expires, a new advertisement is displayed. If the user selects the advertisement before the AD_TIMER expires, the AD_TIMER is reset and placed on hold until the transaction is complete. The completion of a transaction might occur at the end of transfer of a coupon, the entering of the payment method or the entering of the model number for which the consumer wants more information.

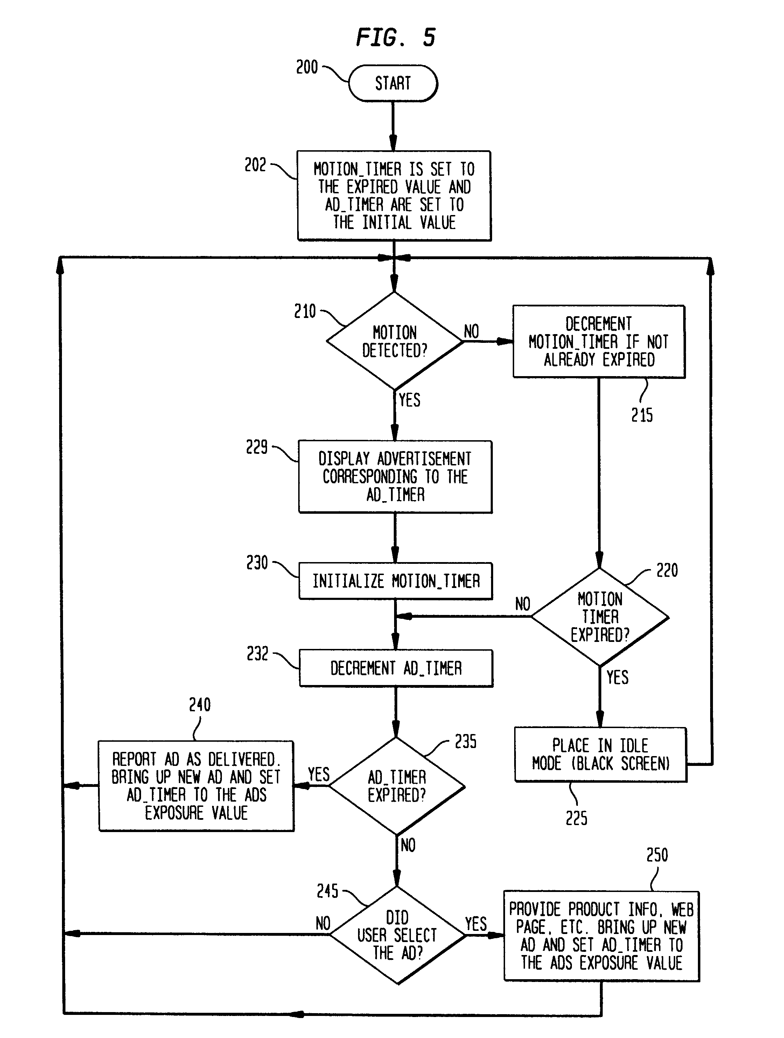

Referring to Figure 5, a flow diagram illustrates the steps required for the operation of motion detected advertising for use in conjunction with the video phone shown in Figs. 3A and 3B.

In step 200, the invention described herein is activated. The activation process can be initiated automatically by the power-up of the videophone 130. In the alternative, the activation process could take place at a remote location such as at the NSP 34.

In step 202, the MOTION_TIMER and the AD_TIMER are set to their initial values. The initial setting on the MOTION_TIMER will determine the amount of time the advertisement will remain displayed when the motion detector 148 no longer detects motion. The initial setting on the AD_TIMER is determined by the advertiser and is implemented at the location in which the AD_TIMER resides. The advertiser determines the length of time he/she wants allocated for a particular advertisement. This increment of time becomes the initial setting of the AD_TIMER. As information is received from consumers such as viewing time, purchases and requests for further information, the amount of time allocated to a particular advertisement can be adjusted to target the specific needs of each consumer or consumer group.

In step 210 the motion detector 148 operates to detect motion near the videophone 130. The detection of motion by the motion detector 148 (or the absence of motion) operates to trigger the steps described herein.

If the motion detector 148 does not detect motion in step 210, the MOTION_TIMER is decremented if it has not already expired, which occurs in step 215. From step 215, the system inquires into whether the MOTION_TIMER has expired in step 220. If the answer is yes, step 225 places the touch screen display 141 in idle mode. Idle mode can be a black screen or any other method of conserving power or preventing screen damage.

If the answer to the inquiry in step 220 is no, the MOTION_TIMER is functioning as a hysterisis for the system and therefore step 232 and certain steps described below would be performed.

If motion is detected in step 210, then in step 230 the MOTION_TIMER is reset and in step 232 the AD_TIMER is decremented by a predetermined amount. For example, if the advertiser has been allotted X amount of seconds, the AD_TIMER would initially be set to that alotted time. The time alotted to each advertisement corresponding to the initial time value for initializing the AD_TIMER is defined as the particular advertisement's exposure value. The advertiser can control the amount of time the consumer is exposed to a particular advertisement based upon the advertisement's exposure value.

In step 235, the system checks if the AD_TIMER has expired. If an advertiser was allotted one minute and the full minute will be delivered to the consumer after the AD_TIMER has been decremented, the answer to the inquiry would be yes and step 240 would be performed.

In step 240, the remaining time alotted to the particular advertisement is delivered to the consumer. Once the advertisement has fulfilled its alotted time limit (i.e. the AD_TIMER has expired), the new advertisement is cued and the AD_TIMER is set to the new advertisement's exposure value. The system would then revert back to step 210 to determine if there is any motion detected.

If the AD_TIMER has not expired, in which case the answer to the inquiry under step 235 would be "no", step 245 would be performed. In step 245, the system inquires into whether the user selected the advertisement. If the answer is "no", the system would revert back to step 210 to determine if there is any motion. If the answer to the inquiry in step 245 is "yes", a second screen is shown to the consumer giving additional options. After the consumer has finished with the subscreens of a particular advertisement, the system would revert back to step 210 in which the system inquires whether the motion detector 148 has detected any motion.

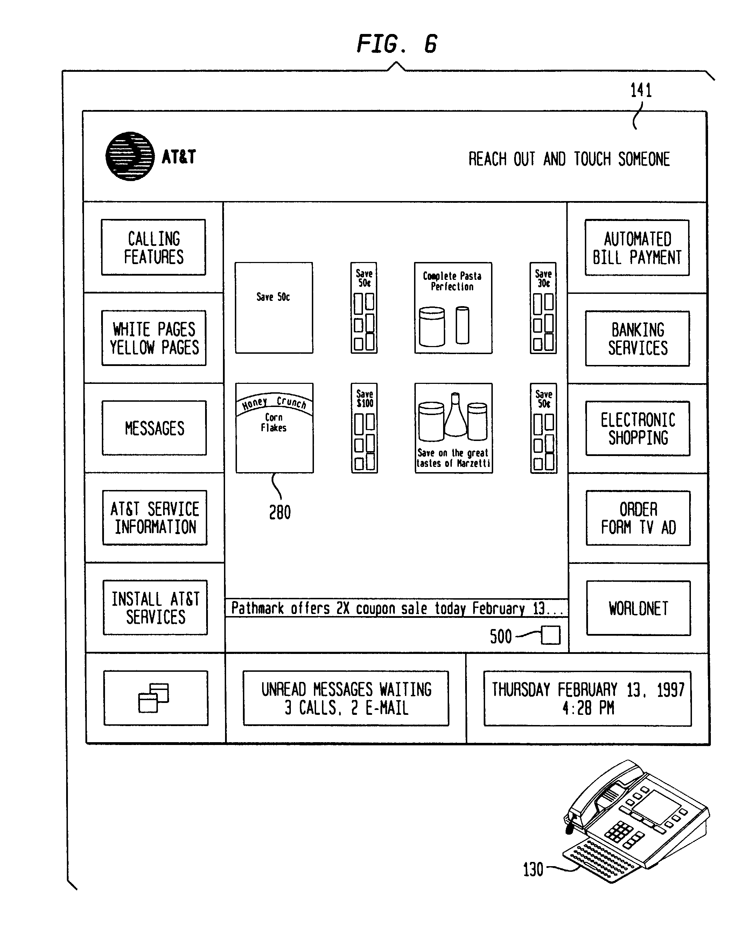

Figure 6 shows a sample screen of what a videophone advertisement could look like. Since the touch screen display 141 translates the touch of a finger into system commands, touching the screen in the area identified by reference numeral 280 with a finger or other object would instruct the system to show the next screen and the particular product the consumer was interested in.

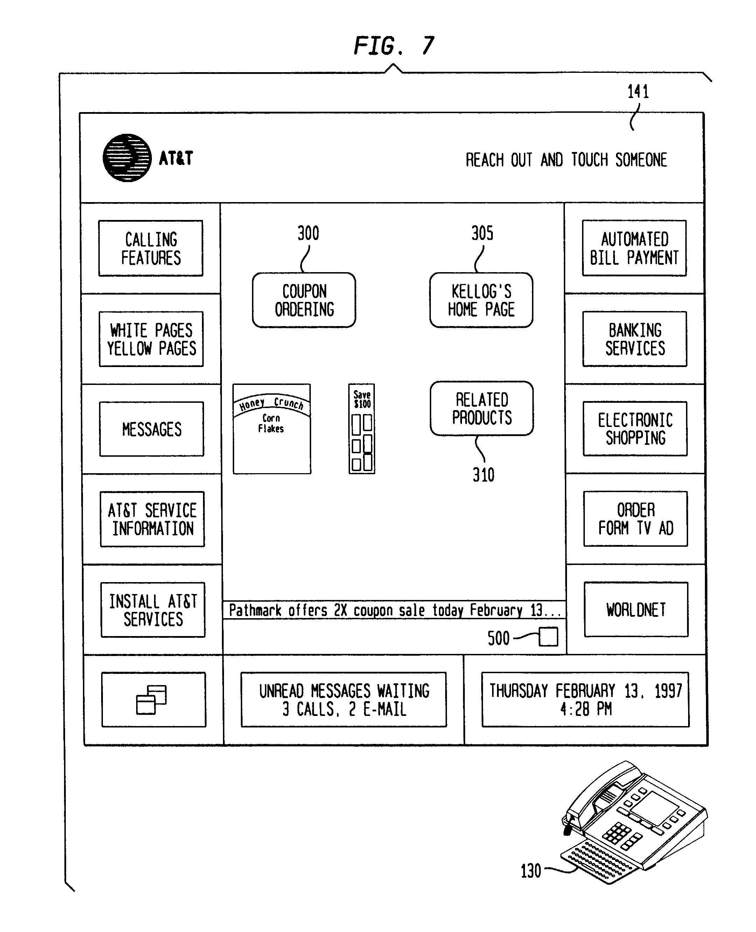

Referring to Figure 7, another sample screen with more detailed options (300, 305, 310) is made available for the consumer after the decision has been made for further information. At this point, the consumer has expressed interest in the product and now can receive further detailed information such as COUPON ORDERING 300 or finding out information about RELATED PRODUCTS 310. All of the information from each inquiry made by the consumer can be logged and tabulated at the ISD 22 or the NSP 36 for use by the advertiser in targeting a particular consumer with related products.

If at any time the consumer wants to use the videophone 130 to place a call or for any other non-advertisement service, then, by simply touching a designated area 500, the user is given immediate access to the main menu of the screenphone. As a result of such a transaction, then both the AD_TIMER and MOTION_TIMER would be held in reset.

The principles as applied above are in no way confined to advertising using a visual display but could equally be applied to advertising using an audio display. It should be noted that the term display refers to a means for presenting the consumer with an advertisement. Consequently, visual display would refer to a video terminal that shows the content of the advertisement. Similarly, a audio display would refer to an audio device, such as a speaker, that presents the content of the advertisement to the consumer. User responses might be articulated words or phrases recognized by the videophone 130. As a result, the fact that a visual display is used to describe the best mode of operation for the present invention, in no way limits the scope of the present invention to a visual means of advertisement. As a result, the term sensual proximity would mean a distance within the space of the display in which visual presentation of the advertisement can be readily seen and in which audio presentation of the advertisement can be readily heard.

The present invention provides a novel approach for maximizing the exposure of advertisements to potential consumers. In its broadest sense, the present invention give advertisers the ability to expose consumers to advertisements for a specified period, as well as collect information on the exposure that a customer has had with an advertisement or group of advertisements before a purchase is made. Based on this information, advertisers can make strategic decisions on how to more efficiently market their products.

The following applications, filed concurrently herewith, are hereby incorporated by reference:
1. A Hybrid Fiber Twisted-pair Local Loop Network Service Architecture (Gerszberg 41-3-13);
2. Dynamic Bandwidth Allocation for use in the Hybrid Fiber Twisted-pair Local Loop Network Service Architecture (Gerszberg 424-14);
3. The VideoPhone (Gerszberg 43-9-2);
4. VideoPhone Privacy Activator (Gerszberg 44-10-3);
5. VideoPhone Form Factor (Gerszberg 45-11-4);
6. VideoPhone Centrally Controlled User Interface With User Selectable Options (Gerszberg 46-12-5);
7. VideoPhone User Interface Having Multiple Menu Hierarchies (Gerszberg 47-13-6);
8. VideoPhone Blocker (Gerszberg 79-38-26);
9. VideoPhone Inter-com For Extension Phones (Gerszberg 48-14-7);
10. Advertising Screen Saver (53-17);
11. VideoPhone FlexiView Advertising (Gerszberg 49-15-8);
12. VideoPhone Multimedia Announcement Answering Machine (Gerszberg 73-32-20);
13. VideoPhone Multimedia Announcement Message Toolkit (Gerszberg 74-33-21);
14. VideoPhone Multimedia Video Message Reception (Gerszberg 75-34-22);
15. VideoPhone Multimedia Interactive Corporate Menu Answering Machine Announcement (Gerszberg 76-35-23);
16. VideoPhone Multimedia Interactive On-Hold Information Menus (Gerszberg 77-36-24);
17. VideoPhone Advertisement When Calling Video Non-enabled VideoPhone Users (Gerszberg 78-37-25);
18. Interactive Commercials (Gerszberg 55-19);
19. VideoPhone Electronic Catalogue Service (Gerszberg 50-16-9);
20. A Facilities Management Platform For Hybrid Fiber Twisted-pair Local Loop Network, Service Architecture (Barzegar 18-56-17);
21. Multiple Service Access on Single Twisted-pair (Barzegar (16-51 - 15);
22. Life Line Support for Multiple Service Access on Single Twisted-pair (Barzegar 17-52-16);
23. A Network Server Platform (NSP) For a Hybrid Fiber Twisted-pair (HFTP) Local Loop Network Service Architecture (Gerszberg 574-2-2-4);
24. A Communication Server Apparatus For Interactive Commercial Service (Gerszberg 58-20-11);
25. NSP Multicast, PPV Server (Gerszberg 59-21-12);
26. NSP Internet, JAVA Server and VideoPhone Application Server (Gerszberg 60-5-3-22-18);
27. NSP WAN Interconnectivity Services for Corporate Telecommuters (Gerszberg 71-9-7-4-21-6);
28. NSP Telephone Directory White-Yellow Page Services (Gerszberg 61-6-4-23-19);
29. NSP Integrated Billing System For NSP services and Telephone services (Gerszberg 62-7-5-24-20);
30. Network Server Platform / Facility Management Platform Caching Server (Gerszberg 63-8-6-3-5);
31. An Integrated Services Director (ISD) For HFTP Local Loop Network Service Architecture (Gerszberg 72-36-22-12);
32. ISD and VideoPhone Customer Premise Network (Gerszberg 64-25-34-13-5);
33. ISD Wireless Network (Gerszberg 65-26-35-14-6);
34. ISD Controlled Set-Top Box (Gerszberg 66-27-15-7);
35. Integrated Remote Control and Phone (Gerszberg 67-28-16-8);
36. Integrated Remote Control and Phone User Interface (Gerszberg 68-29-17-9);
37. Integrated Remote Control and Phone Form Factor (Gerszberg 69-30-18-10);
38. VideoPhone Mail Machine (Attorney Docket No. 3493.73170);
39. Restaurant Ordering Via VideoPhone (Attorney Docket No. 3493.73171);
40. Ticket Ordering Via VideoPhone (Attorney Docket No. 3493.73712);
41. Multi-Channel Parallel/Serial Concatenated Convolutional Codes And Trellis Coded Modulation Encode/Decoder (Gelblum 4-3);
42. Spread Spectrum Bit Allocation Algorithm (Shively 19-2);
43. Digital Channelizer With Arbitrary Output Frequency (Helms 5-3);
44. Method And Apparatus For Allocating Data Via Discrete Multiple Tones (filed 12/22/97, Attorney Docket No. 3493.20096--Sankaranarayanan 1-1);
45. Method And Apparatus For Reducing Near-End Cross Talk In Discrete Multi-Tone Modulators/Demodulators (filed 12/22/97, Attorney Docket No. 3493.37219--Helms 4-32-18).

In addition, the following two patent applications are hereby incorporated by reference:
1. U.S. Patent Application 08/943,312 filed October 14, 1997 entitled Wideband Communication System for the Home, to Robert R. Miller, II and Jesse E. Russell, and
2. U.S. Patent Application No. 08/858,170, filed May 14, 1997, entitled Wide Band Transmission Through Wire, to Robert R. Miller, II, Jesse E. Russell and Richard R. Shively.

While exemplary systems and methods embodying the present invention are shown by way of example, it will be understood, of course, that the invention is not limited to these embodiments. Modifications may be made by those skilled in the art, particularly in light of the foregoing teachings. For example, each of the elements of the aforementioned embodiments may be utilized alone or in combination with elements of the other embodiments.

## Claims

1. A method for presenting video information on a video display device comprising:
a) sensing the presence of a video display device user within a predetermined proximity of said video display device;
b) displaying video information on said video display device when said video display device user is sensed within proximity of said video display device.

2. The method of claim 1 further comprising the step of:
controlling the amount of time that said video information appears on said video display device.

3. The method of claim 1 further comprising the step of:
presenting said video information to said consumer on a pre-subscribed basis.

4. The method of claim 1 further comprising the step of:
blanking said video display device if a video display device user is not sensed.

5. The method of claim 1 further comprising the step of:
blanking said video display device if a video display device user is not sensed after a predetermined length of time.

6. The method of claim 1 wherein said step of sensing the presence of a video display device user is comprised of optically sensing the presence of a video display device user.

7. The method of claim 1 wherein said step of sensing the presence of a video display device user is comprised of thermally sensing the presence of a video display device user.

8. The method of claim 1 wherein said step of sensing the method presence of a video display device user is comprised of acoustically sensing the presence of a video display device user.

9. The method of claim 1 wherein said step of sensing the presence of a video display device user is comprised of sensing the movement of a video display device user.

10. The method of Claim 1, wherein said step of displaying said video information on said video display device comprises displaying a commercial advertisement.

11. The method of Claim 1, further comprising the step of:
displaying additional video information on said video display device in response to an input signal to said display device from said video display device user.

12. The method of claim 2, wherein the method of controlling the amount of time that said consumer is exposed to said advertisement comprises:
recording the amount of time that said consumer is exposed to said advertisement;
determining if a predetermined period of display time has elapsed; and
displaying said advertisement on said display if said predetermined period of display time has not elapsed.

13. The method of claim 1, wherein said video display device produces audio signals.

14. A method for presenting information on a videophone comprising:
detecting the presence of a videophone user within a predetermined proximity to said videophone;
displaying said information on said videophone when said videophone user is within said predetermined;
controlling the amount of time that said information is presented to said videophone user in response to an amount time that videophone user is proximate to said videophone.

15. An apparatus for presenting and controlling the display of video information on a videophone to a videophone user comprising:
means for sensing the presence of said videophone user proximate to said videophone ; and
means for displaying a predetermined video-format message on said videophone when a videophone user is sensed proximate to said video phone.

16. The apparatus of claim 15 wherein said means for sensing the presence of said videophone user is a motion detector.

17. The apparatus of claim 15 wherein said means for sensing the presence of said videophone user is an infrared detector.

18. The apparatus of claim 15 wherein said means for sensing the presence of said videophone user is an ultrasonic detector.

19. The apparatus of claim 15 wherein said means for sensing the presence of said videophone user is a video image comparator.

20. The apparatus of claim 15 wherein said means for displaying a means for displaying a predetermined video-format message on said videophone includes a processor. Motion Detection Advertising
